Europäisches Patentamt

European Patent Office

Office européen des brevets

(19)

(11) Numéro de publication: **0 133 112**
**B1**

(12) **FASCICULE DE BREVET EUROPEEN**

(45) Date de publication du fascicule du brevet: **03.05.89**

(51) Int. Cl.⁴: **B 29 C 41/28, B 29 C 41/32**

(21) Numéro de dépôt: **84401517.2**

(22) Date de dépôt: **19.07.84**

(54) **Procédé et dispositif de fabrication de films, feuilles, ou rubans transparents en matière plastique, à au moins deux couches.**

(30) Priorité: **22.07.83 FR 8312140**

(43) Date de publication de la demande:
**13.02.85 Bulletin 85/07**

(45) Mention de la délivrance du brevet:
**03.05.89 Bulletin 89/18**

(84) Etats contractants désignés:
**BE DE FR GB IT LU NL SE**

(56) Documents cités:
**BE-A- 678 248**
**GB-A- 549 902**

(73) Titulaire: **SAINT-GOBAIN VITRAGE**
**Les Miroirs 18, avenue d'Alsace**
**F-92400 Courbevoie (FR)**
(84) **BE FR GB IT LU NL SE**

(73) Titulaire: **VEGLA Vereinigte Glaswerke GmbH**
**Viktoriaallee 3-5**
**D-5100 Aachen (DE)**
(84) **DE**

(72) Inventeur: **Gillner, Manfred**
**Rollersfstrasse 52 b**
**D-5100 Aachen (DE)**
Inventeur: **Sieckmann, Jürgen**
**Tittardshang 13**
**D-5100 Aachen (DE)**

(74) Mandataire: **Muller, René et al**
**SAINT-GOBAIN RECHERCHE 39, quai Lucien Lefranc**
**F-93304 Aubervilliers (FR)**

Courier Press, Leamington Spa, England.

## Description

La présente invention se rapporte à la fabrication de films, de feuilles, ou de rubans transparents en matière plastique, à au moins deux couches, et notamment, à un procédé dans lequel la matière plastique est amenée, par coulée alors qu'elle se trouve sous la forme d'une solution, d'un matériau fondu ou d'un mélange réactionnel se prêtant à la coulée sur un support de coulée en mouvement continu relatif par rapport à la coulée sur lequel la couche déposée durcit et où après durcissement, le film, la feuille ou le ruban formé est détaché du support de coulée.

Au cours de la fabrication, par un procédé de coulée, de couches transparentes en matière plastique possédant de très bonnes propriétés optiques, la qualité de la surface du support de coulée est d'une importance déterminante pour la qualité optique des couches. Jusqu'à présent, pour obtenir les propriétés optiques souhaitées, il s'est révélé nécessaire d'utiliser comme support de coulée des surfaces de verre planes possédant la qualité de surface désirée. On connait, par exemple par la publication de brevet allemand DE—A—27 26 159 un procédé dans lequel le support de coulée est une bande horizontale, continue de plaques de verre juxtaposées les unes aux autres. On connait également, par le brevet allemand DE—C—24 22 543, un procédé dans lequel le support de coulée est un ruban de verre horizontal, continu que l'on utilise directement à la sortie de sa ligne de fabrication.

Ces procédés connus procurent des résultats satisfaisants quant aux qualités optiques des couches obtenues. Toutefois, ils présentent également un certain nombre d'inconvénients. Ainsi, dans le cas où le support de coulée est une bande horizontale formée de plaques de verre juxtaposées les unes aux autres, on ne peut utiliser les parties des couches qui se sont formées au-dessus des jonctions entre les plaques. Dans le cas de l'utilisation d'un ruban de verre continu, étant donnée la taille des unités de fabrication actuelles pour le verre, on ne dispose pas toujours de possibilités suffisantes d'aménagement.

On connait encore d'après la publication BE—A—678248 un procédé et un dispositif selon les préambules des revendications 1 et 9 selon lequel on fabrique par un procédé à la solution un film à surfaces lisses sans emploi d'un support lisse. A cette fin, il était proposé d'étaler une solution filmogène sur la surface d'un premier support, de détacher le film et d'étaler ensuite la même solution sur la surface du film qui était au contact du support, en utilisant le film comme second support. Mais ce procédé n'est pas adapté à la fabrication d'une couche de matière plastique de haute qualité optique, c'est-à-dire d'une qualité optique répondant aux normes d'utilisation dans les vitrages feuilletés, car cette fabrication nécessite une coulée sur un support parfaitement plan et horizontal.

L'invention obvie aux inconvénients cités. Elle a pour objet la fabrication de feuilles, films ou rubans de matière plastique possédant de très bonnes propriétés optiques, par un procédé de coulée sur un support plan, horizontal, qui ne requière pas l'utilisation d'un support de coulée possédant une surface parfaitement lisse, c'est-à-dire exempte de tous les défauts qui pourraient nuire aux qualités optiques des couches.

A cet effet, l'invention propose un procédé de fabrication de films, feuilles ou rubans transparents en matière plastique à au moins deux couches, par coulée d'une première couche à partir d'une solution, sur un support de coulée plan et horizontal en déplacement relatif par rapport à la coulée, la première couche étant après durcissement détachée du support de coulée et retournée, puis par coulée d'une deuxième couche à partir d'une solution sur la face de la première couche qui initialement se trouvait au contact du support de coulée caractérisé en ce que les films, feuilles ou rubans transparents en matière plastique présentant une qualité optique nécessaire pour pouvoir être utilisés dans la fabrication des vitrages feuilletés sont obtenus par coulée de la première couche à partir d'une solution d'un matériau fondu ou d'un mélange réactionnel qui après le durcissement, le détachement du support de coulée et le retournement est disposée à nouveau sur un support de coulée plan et horizontal sur lequel elle est maintenue pour la coulée de la deuxième couche à partir d'une solution, d'un matériau fondu ou d'un mélange réactionnel, cette deuxième couche présentant des propriétés optiques de transparence équivalentes à celles de la première couche, et au moins une des deux couches étant obtenue par coulée d'un mélange réactionnel. Le terme "retournée" signifie selon l'invention que la face de la première couche initialement orientée vers le bas, donc du coté opposé à la coulée, est orientée vers le haut pour recevoir l'autre couche.

Il est en effet remarquable, et mis à profit par l'invention que la face libre d'une couche fabriquée par un procédé de coulée se présente en toutes circonstances sous la forme d'une surface plane avec d'excellentes propriétés optiques, même lorsque le support de coulée ne possède pas lesdites propriétés optiques à un degré aussi élevée, à condition toutefois que la première couche soit après retournement disposée à nouveau sur un support plan, horizontal et maintenue sur lui. L'invention permet donc l'obtention d'une feuille ayant au moins deux couches, et dont aucune des deux faces externes, avant la consolidation des couches ayant donné lieu à la formation de ces faces, ne s'est trouvée en contact direct avec le support de coulée. Ainsi, l'impression inévitable, sur la face de la couche en formation qui se trouve en contact avec le support de coulée, de défauts de surface indésirables dudit support de coulée, devient secondaire: en effet, à la suite du retournement de la première couche, la face considérée constitué une face interne recouverte par une deuxième couche, également coulée, de l'ensemble de couches finalement fabriqué.

La position plane et horizontale de la première couche sur le second support pour la fabrication de la deuxième couche est une caractéristique essentielle de l'invention. Cette position peut être assurée par un maintien annexe, par exemple de façon électrostatique ou par aspiration.

On peut encore améliorer la position plane et horizontale de la première couche en la rigidifiant, par exemple par une feuille de renforcement.

Le procédé objet de l'invention peut s'appliquer à la fabrication d'une feuille à deux couches de même nature. En particulier, les deux couches peuvent être obtenues à partir d'un même mélange réactionnel se prêtant à la coulée et comprenant les constituants nécessaires à l'obtention d'un polyuréthane aliphatique thermodurcissable, c'est-à-dire entièrement réticulé. Les composants polyols et isocyanates nécessaires sont tels que l'un au moins des deux types de composants possède une fonctionnalité de 3. En tant que composant isocyanate, on peut utiliser: des isocyanates bifonctionnels comme l'hexaméthylènediisocyanate, le triméthylhexaméthylènediisocyanate, le 4,4'-méthylènecyclohexyldiisocyanate, l'isophoronediisocyanate ou leurs biurets isocyanurates et composés analogues tri- ou plurifonctionnels, de même que des polyols plurifonctionnels, c'est à dire ramifiés, par exemple des polyesters ou polyéthers tels qu'ils sont obtenus par réaction d'alcools plurifonctionnels tels que le glycérol, le triméthylolpropane, l'hexanetriol, le pentaérythritol, le sorbitol, etc. avec des acides dicarboxyliques aliphatiques, comme l'acide adipique, ou avec des éthers cycliques comme l'oxyde d'éthylène, l'oxyde de propylène ou le tétrahydrofurane. Les poids moléculaires des polyols ramifiés doivent être de 250 à 4000 et sont de préférence de 450 à 2000. Une telle feuille sert notamment de revêtement de pare-brise d'automobile grâce à ses propriétés hautement élastiques lui conférant des propriétés d'antilacération et d'autocicatrisation.

Le procédé peut aussi s'appliquer à la fabrication de deux couches d'un polyuréthane légèrement réticulé obtenu par coulée réactive à température élevée, de l'ordre de 80 à 140°C, à partir d'un mélange de composants polyols et isocyanates essentiellement difonctionnels ou présentant une faible quantité de l'un ou l'autre de ces composants sous forme trifonctionnelle. En particulier, le mélange réactionnel comprend un composant isocyanate d'une viscosité inférieure à 5000 centipoises à 40°C et un composant polyol, le composant isocyanate comprenant au moins un diisocyanate aliphatique ou cycloaliphatique ou un prépolymère d'isocyanate, le composant polyol comprenant au moins un polyol long difonctionnel de masse moléculaire comprise entre 500 et 4000 et au moins un diol court en tant qu'agent d'allongement de chaîne.

Suivant une variante, le procédé s'applique à la fabrication d'une feuille à deux couches de nature différente, mais présentant des propriétés optiques équivalentes.

En particulier, la première couche d'une épaisseur par exemple comprise entre 0,2 et 0,3 mm et de préférence entre 0,4 et 0,6 mm peut être obtenue à partir d'un mélange réactionnel se prêtant à la coulée et destiné à l'obtention d'un polyuréthane aliphatique thermodurcissable, comme défini précédemment, et la deuxième couche, d'une épaisseur par exemple comprise entre 0,01 et 0,8 mm à partir d'une solution, d'une composition fondue ou d'un mélange réactionnel pour l'obtention d'un polyuréthane thermoplastique essentiellement linéaire et ayant des propriétés d'adhésion. Les composant de départ pour le polyuréthane thermoplastique peuvent être: des polyols linéaires comme des polyesters d'acide adipique ayant un poids moléculaire de 500 à 4000 et de préférence de 1000 à 2000, obtenus par exemple à partir de 1,2-propanediol, 1,4-butanediol, 1,3-diméthylpropanediol, 1,6-hexane-diol, ou des mélanges de tels polyesters linéaires ayant un poids moléculaire également compris entre 500 et 4000 et de préférence entre 1000 et 2000, obtenus à partir d'oxyde d'éthylène, d'oxyde de propylène ou de tétrahydrofurane; et des isocyanates comme l'hexaméthylènediisocyanate, le triméthylhexaméthylènediisocyanate, le m-xylylènediisocyanate, le 4,4'-méthylènebis (cyclohexylisocyanate), l'isophoronediisocyanate ou leurs dérivés linéaires.

Une telle feuille est destinée notamment à être déposée sur un support rigide transparent en verre de silicate, afin de constituer un vitrage feuilleté notamment de pare-brise automobile.

Suivant une autre variante, la première couche est toujours une couche d'un polyuréthane aliphatique thermodurcissable et la deuxième couche est le polyuréthane légèrement réticulé cité ci-dessus.

Le procédé peut également s'appliquer à une feuille à plus de deux couches lorsqu'on souhaite obtenir une feuille multicouches avec de bonnes propriétés optiques, étant entendu qu'aucune des deux faces de la feuille obtenue n'a été placée au contact du support de coulée au cours de leur formation.

Suivant une autre caractéristique de l'invention, on peut traiter la face de la première couche initialement en contact du support, avant l'apport de la seconde couche et protéger ensuite ce traitement par l'apport de la deuxième couche. Ainsi, avantageusement, on peut imprimer la face initialement au contact du support et recouvrir ensuite l'impression par la deuxième couche qui protège cette impression. L'impression peut consister en la formation de bandes filtrantes à l'aide d'une encre d'imprimerie.

L'invention concerne également un dispositif pour la mise en oeuvre du procédé.

Le dispositif selon l'invention comprend un support de coulée plan et horizontal pour la formation de la première couche, des moyens d'extraction et de retournement de la couche formée, un support plan et horizontal pour la couche retournée disposés entre les deux coulées, des moyens pour l'apport de la matière à couler disposés au-dessus de la zone amont du support de coulée et des moyens pour l'apport de la matière à couler disposés au-dessus de la zone amont de la couche retournée, des moyens pour le durcissement des couches par polymérisation et/ou pour l'évaporation de solvant, caractérisé en ce que pour fabriquer des films, feuilles ou rubans transparents en matière plastique présentant la qualité optique nécessaire pour pourvoir être utilisés dans la fabrication des vitrages feuilletés il est prévu un support de coulée plan et horizontal pour la coulée de la deuxième couche, les supports de coulée pour la première et la deuxième couche étant tous deux constitués d'une bande transporteuse sans fin qui glisse sur une base plane servant d'appui, des moyens pour maintenir la première couche sur le support de coulée pour la fabrication de la deuxième couche étant prévus.

Comme décrit précédemment, il est essentiel pour l'obtention d'une bonne qualité optique que le support de coulée soit horizontal aussi bien pour l'apport de la première couche que pour le soutien de cette couche pour l'apport de la deuxième couche.

Le support de coulée pour la formation de la première couche est une bande sans fin horizontale. Le support de coulée est en un matériau autorisant la coulée par exemple un métal tel de l'acier inoxydable. Le cas échéant, il est revêtu d'un agent de séparation facilitant l'extraction de la couche formée.

Le support pour la couche retournée est du même type, à savoir une bande plane sans fin, horizontale.

Les deux bandes transporteuses sans fin glissent chacune sur une base plane servant d'appui.

Dans une réalisation préférée du dispositif, le support de coulée et le support pour la couche retournée sont formés de deux bandes métalliques sans fin horizontales, avantageusement disposées l'une en dessous de l'autre, éventuellement recouvertes d'une couche d'un agent de séparation par exemple une feuille de papier siliconé.

Lorsque la première couche ne présente pas les caractéristiques mécaniques lui permettant de rester parfaitement plane et horizontale sur le second support, le dispositif comprend alors des moyens assurant ce maintien plan et horizontal. Ces moyens sont par exemple des moyens électrostatiques. Dans une variante le second support est percé de trou et il est associé à des moyens d'aspiration qui maintiennent la couche plaquée contre lui.

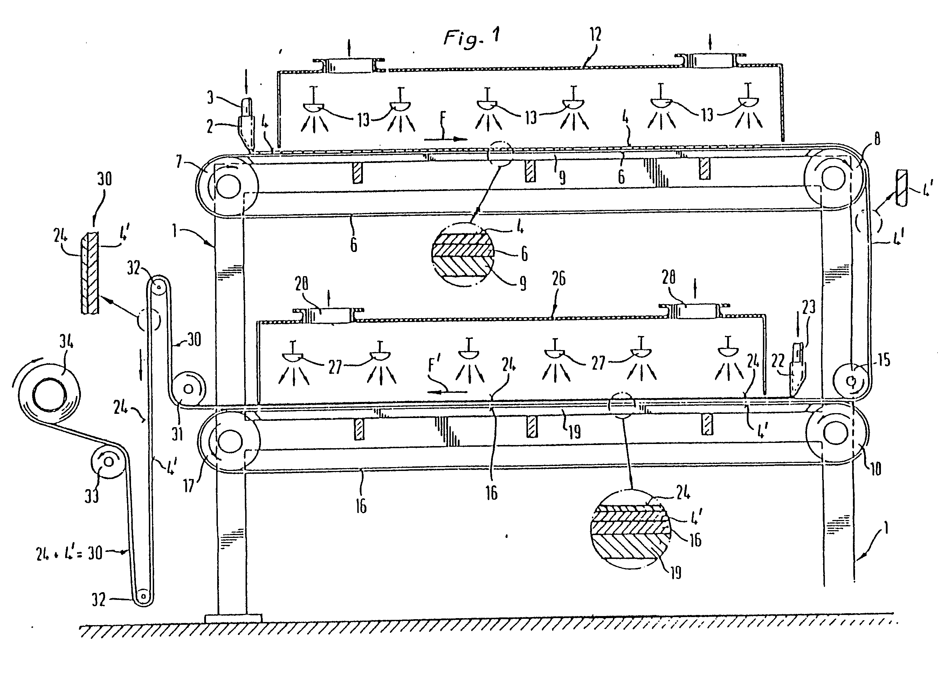

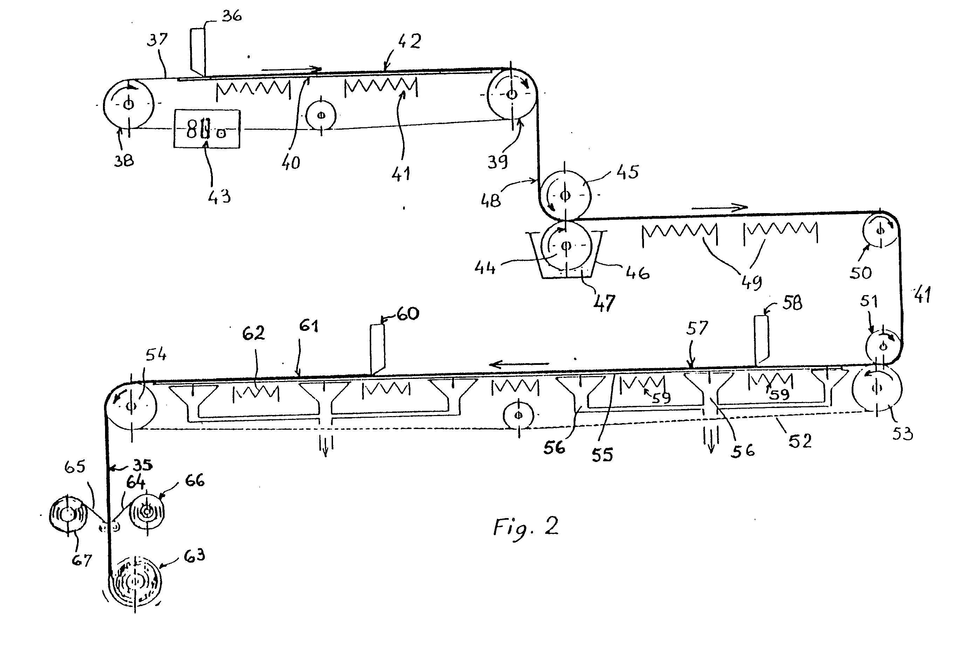

D'autres avantages et caractéristiques de l'invention apparaitront dans la description suivant d'exemples de réalisation du dispositif en relation avec les figures 1 et 2.

—la figure 1 représente un dispositif pouvant être utilisé pour la fabrication d'une feuille continue de matière plastique à deux couches

—la figure 2 représente un dispositif pour la fabrication d'une feuille à trois couches.

Le dispositif de la figure 1 peut être utilisé pour la fabrication d'une feuille continue de matière plastique à deux couches, par exemple une couche de polyuréthane thermodurcissable présentant des propriétés d'antilacération et d'autocicatrisation obtenues par coulée réactive d'un composant polyol et d'un composant isocyanate et une couche de polyuréthane présentant des propriétés d'adhésion, notamment un polyuréthane thermoplastique obtenue par coulée d'une solution.

L'application qui est faite de ce type de feuille lui impose de posséder d'excellentes propriétés optiques. De même que le support rigide auquel elle est destinée, elle doit garantir une transparence sans défaut, et doit par conséquent être totalement exempte de stries ou de toutes espèces d'irrégularités de surface.

Ce dispositif peut également être utilisé pour la fabrication d'une feuille à deux couches, une couche de polyuréthane thermodurcissable présentant des propriétés d'autocicatrisation et d'antilacération et une couche de polyuréthane présentant des propriétés d'absorbeur d'énergie.

Les longueurs des différentes parties qui le constituent et sur lesquelles on effectue les coulées successives ainsi que les caractéristiques des éléments chauffants sont adaptés aux caractéristiques de durcissement par polymérisation ou évaporation de solvant des couches à former.

Le dispositif comprend deux zones de coulée, de structure sensiblement identique, et disposées l'une au-dessus de l'autre perpendiculairement à un cadre 1 commun.

La première zone de coulée comprend une tête de coulée 2, par exemple une tête de coulée à râcle comme décrite dans la publication de brevet français FR—A—2 347 170, à l'aide de laquelle on dépose sur un support de coulée plan la masse se prêtant à la coulée pour la formation de la première couche. On amène la masse à la tête de coulée par un conduit 3. On dépose sur le support, grâce à la tête de coulée, une couche 4 d'épaisseur homogène. Le support de coulée est constitué d'un ruban d'acier inoxydable flexible et sans fin, dont la surface est polie. Ce ruban 6 se déplace grâce aux deux rouleaux de guidage 7 et 8 dont un au moins est entraîne, de sorte que ce ruban d'acier servant de support de coulée se déplace à vitesse constante dans le sens de la flèche F. Il glisse, dans la zone de coulée, c'est-à-dire la partie supérieure du ruban sur une base plane 9 qui sert d'appui et assure que sur toute la zone de coulée le ruban d'acier conserve sa planéité.

Au-dessus du ruban d'acier, et à la suite de la tête de coulée dans le sens du déplacement du ruban, se trouve un bâti 12, dans lequel on dispose des éléments chauffants 13 permettant de chauffer la couche 4 à la température souhaitée nécessaire au durcissement par exemple par une polymérisation suffisante de ladite couche pour pouvoir, ultérieurement, la détacher du ruban d'acier.

Au niveau où le ruban d'acier 6 atteint le rouleau 8 et renverse le sens de son déplacement, la couche 4 durcie (désignée par 4' sur la figure) est détachée du ruban d'acier et est alors transportée verticalement vers le bas. Lorsqu'elle atteint le rouleau de guidage 15, elle change à nouveau sa direction de déplacement et retrouve une direction de défilement horizontale, dans le sens de la flèche F'. Elle avance, dans cette direction, sur un ruban d'acier 16; la face qui, dans la première zone de coulée, n'était pas en contact avec le ruban d'acier, se trouve maintenant en contact direct avec lui. Le ruban d'acier 16 est analogue au ruban 6. Il défile grâce aux deux rouleaux de guidage 17 et 18 dont un au moins est entraîné, à la même vitesse que le ruban 6, et, dans sa partie supérieure, dans un sens opposé indiqué par la flèche F'. De la même façon que précédemment, le ruban glisse, dans sa partie supérieure, sur une base plane 19 qui sert d'appui à la couche 4', et assure ainsi que le ruban d'acier conserve sa planéité dans toute la zone où il sert de support à la couche, ou aux couches.

A l'entrée de cette deuxième zone de coulée, au-dessus du ruban d'acier 16, se trouve une seconde tête de coulée 22, du même type que la première, dans laquelle est amenée une masse se prêtant à la coulée par le conduit 23. Grâce à cette tête de coulée, on dépose une deuxième couche 24 d'épaisseur homogène sur la couche 4'.

Au-dessus du ruban d'acier, et à la suite de la tête du coulée, dans le sens du déplacement du ruban, se trouve un bâti 26 comprenant des éléments chauffants 27. Ils permettent le maintien d'une température régulée, afin d'accélérer le séchage de la couche 24 fraîchement déposée. Les tubulures 28 permettent d'aspirer les éventuelles vapeurs de solvant. A la fin de la zone de transport du ruban d'acier 16, la couche 24 est parfaitement séchée et solidifiée, de sorte que la feuille 30, composée des deux couches 24 et 4' déposées selon le processus indiqué, peut être à ce niveau détachée du ruban; on peut par exemple la transporter verticalement vers le haut, après avoir changé sa direction au niveau où le ruban d'acier atteint la poulie de guidage 17, puis l'enrouler sur le rouleau 34 après l'avoir dégagée du support de coulée grâce aux rouleaux 32 et 33.

La figure 2 représente un dispositif pour la fabrication d'une feuille à trois couches 35 comportant une impression interne obtenue par dépôt d'une encre sur la première couche. Ce dispositif comprend une première zone de coulée équipée d'une tête de coulée 36 disposée au dessus de la partie amont d'un support de coulée constitué d'un ruban d'acier inoxydable sans fin 37, entraîné par deux rouleaux 38, 39. Ce ruban glisse sur une base plane 40 qui sert d'appui plan, horizontal. En aval de la tête de coulée, disposés sous le ruban métallique, des éléments chauffants 41 assurent la polymérisation de la couche 42. Des moyens de nettoyage 43 sont prévus au retour du ruban d'acier. Disposé en aval de la première zone de coulée, le dispositif comprend un système d'impression avec un rouleau imprimeur 44, un contre rouleau 45, et une cuve 46 contenant l'encre d'impression 47. L'impression est appliquée par le rouleau 43 sur la face 48 qui était au contact du ruban métallique.

L'impression peut être de différents types: ce peut être par exemple des bandes filtrantes. L'encre d'impression est séchée par des éléments chauffants 49. Après passage autour des rouleaux 50, 51, la couche 41 imprimée arrive à une seconde zone de coulée où elle est placée sur un ruban métallique sans fin 52 entrainé par deux rouleaux 53, 54. Le ruban glisse sur une table horizontale et plane 55. Le ruban métallique et la table sont percés de trous de sorte qu'un système d'aspiration 56 permet d'appliquer parfaitement la couche sur le ruban métallique. Une seconde couche 57 est déposée sur la première couche grâce à une tête de coulée 58. Des éléments chauffants 59 assure la polymérisation de cette seconde couche qui recouvre l'impression déposée auparavant sur la couche 41.

Une troisième zone de coulée, disposée dans la partie aval du même ruban métallique 52, permet l'apport par une troisième tête de coulée 60 d'une couche supplémentaire 61, par exemple une couche adhésive qui est ensuite durcie par les éléments chauffants 62. Après détachement de la feuille à trois couches 35 du ruban métallique 52, la feuille est enroulée pour former un rouleau 63 après qu'elle ait été revêtue sur ses deux faces de films de protection 64 et 65 debités par le rouleaux 66 et 67.

Exemple 1

A l'aide du dispositif décrit en relation avec la figure 1, on fabrique une feuille à deux couches à savoir une couche de polyuréthane thermodurcissable et une couche de polyuréthane thermoplastique ayant des propriétés d'adhésion.

On prépare une composition se prêtant à la coulée pour la fabrication de la couche de polyuréthane thermodurcissable de la façon suivante:

On mélange de façon homogène, en évitant la formation de bulles d'air par dégazage sous vide:

—1000 g d'un polyéther préparé par condensation d'oxyde de propylène avec un triol, avec un poids moléculaire d'environ 450 et une teneur en radicaux OH libres de 10,5 à 12%,

—23 g de 2,6-di-t-butyl-p-crésol,

—0,5 g de dilaurate de dibutylétain, et

—1000 g d'un biuret de 1,6-hexaméthylènediisocyanate ayant une teneur en radicaux NCO libres de 21 à 25%.

On prépare une composition se prêtant à la coulée pour la formation de la couche adhésive de la façon suivante:

On réalise dans une cuve de réaction, par chauffage, la polyaddition:

—de 1000 g d'un polyester linéaire issu de 100 parties d'acide adipique et de 56 parties d'hexanediol-1,6, de 30 parties de 2,2-diméthylpropanediol-1,3, et de 7 parties de propanediol-1,2, ayant un poids moléculaire de 1850 et une teneur en radicaux OH libres de 1,5 à 1,6% et,

—de 128 g de 4,4'-méthylènebis (cyclohexylisocyanate) ayant une teneur en radicaux NCO libres de 31,5%.

On granule la masse fondue refroidie et on la dissout dans du diméthylformamide pour obtenir une solution à 10%.

A partir de ces compositions se prêtant à la coulée, on fabrique une feuille composée de deux couches à l'aide du dispositif de coulée de la façon suivante:

Le mélange réactionnel est coulé sur la bande sans fin 6 revêtu d'un agent de séparation tel que décrit dans la publication de brevet français 2 383 000 à l'aide de la tête de coulée 2 pour former une couche 4 qui, sous l'action des éléments chauffants 13, durcit par polymérisation pour donner la couche 4'. En bout de la bande 6, après passage autour du rouleau 8, la couche 4' est détachée du support, et placée sur le ruban 16 après passage autour du rouleau 15. La solution de polyuréthane thermoplastique est coulée sur la couche 4 à l'aide de la tête de coulée 22. Sous l'action des éléments chauffants 27, le solvant est évaporé, les vapeurs étant aspirées dans les tubulures 22, et la couche coulée 24 durcit. La feuille à deux couches est extraite du ruban 16 et après passage autour des rouleaux 31, 32, 33 est enroulée sur le rouleau 34.

Exemple 2

On fabrique, à l'aide du dispositif décrit en relation avec la figure 1, une feuille transparente en matière plastique à double couche, à savoir une couche adhésive ayant des propriétés d'absorbeur d'énergie et une couche de revêtement transparente en matière plastique résistant à la rayure et à l'abrasion désignée par couche autocicatrisable ou couche de protection interne, car orientée vers l'intérieur de l'habitacle dans le cas d'un pare-brise.

Sur le support de coulée 6, on coule un mélange homogène dans les proportions suivantes de:

—1000 g d'un polyéther d'un poids moléculaire d'environ 450 obtenu par condensation d'oxyde de 1,2-propylène avec du 2,2-bis (hydroxyméthyl-1-butanol) et ayant une teneur en radicaux hydroxyle libre d'environ 10,5 à 12% contenant 1% en poids d'un stabilisant, 0,05% en poids d'un catalyseur à savoir du dilaurate de dibutylétain, 0,1% en poids d'un agent nappant.

—1020 g d'un biuret de 1,6-hexanediisocyanate ayant une teneur en radicaux isocyanates libres d'environ 23,2%.

On forme une couche uniforme qui après polymérisation sous l'effet de la chaleur, par exemple environ 15 minutes à 120°C, présente une épaisseur d'environ 0,19 mm et des propriétés d'autocicatrisation. Après extraction de la couche du ruban 6 on la place sur le ruban 16 pour la coulée de la dénommée couche.

Pour fabriquer la couche ayant des propriétés d'absorbeur d'énergie, on prépare au préalable le composant polyol en mélangeant un polytétraméthylèneglycol de masse moléculaire 1000 (par exemple le produit commercialisé sous l'appellation Polymeg 1000 par la société QUAKER OATS), avec du butanediol-1,4, les proportions des deux constituants étant telles que le polytétraméthylèneglycol apporte 0,37 équivalent en groupes hydroxyles alors que le butanediol-1,4 en apporte 0,63.

Au composant polyol on incorpore un stabilisant à raison de 0,5% en poids de la masse totale du composant polyol et du composant isocyanate, un agent nappant à raison de 0,05% en poids calculé de la même façon et un catalyseur à savoir du dilaurate de dibutylétain à raison de 0,02% en poids calculé de la même façon que précédemment

Le composant isocyanate utilisé est du 3-isocyanatométhyl - 3,5,5 - triméthylcyclohexylisocyanate (IPDI) présentant des fonctions urées obtenues par hydrolyse partielle de l'IPDI et ayant une teneur en groupements NCO d'environ 31,5% en poids.

Les composants sont pris en quantités telles que le rapport NCO/OH est de 1.

Après dégazage sous vide des composants, le mélange porté à environ 40°C est coulé sur la couche de polyuréthane autocicatrisable formée précédemment et qui a été placée sur le ruban 16. On forme ainsi une couche d'environ 0,53 mm d'épaisseur qui est soumise à un cycle de polymérisation consistant en 25 minutes de chauffage à 120°C environ.

La feuille à deux couches est alors retirée du support 16 et elle peut être manipulée aisément, stockée ou utilisée juste après pour la fabrication d'un vitrage feuilleté.

Exemple 3

Pour la fabrication de la feuille à deux couches de l'exemple 2, on peut également envisager de former en premier lieu la couche ayant des propriétés d'absorbeur d'énergie, et ensuite, après son extraction du support de coulée et son retournement, de former la couche ayant des propriétés d'adhésion.

**Revendications**

1. Procédé de fabrication de films, feuilles ou rubans transparents en matière plastique, à au moins deux couches, par coulée d'une première couche (4, 42) à partir d'une solution, sur un support de coulée plan et horizontal (6, 37) en déplacement relatif par rapport à la coulée, la première couche (4, 42) étant après durcissement détachée du support de coulée et retournée, puis par coulée d'une deuxième couche (24, 57) à partir d'une solution sur la face de la première couche (4, 42) qui initialement se trouvait au contact du support de coulée (6, 37) caractérisé en ce que les films, feuilles ou rubans transparents en matière plastique présentant une qualité optique nécessaire pour pouvoir être utilisés dans la fabrication des vitrages feuilletés sont obtenus par coulée de la première couche (4, 42) à partir d'une solution, d'un matériau fondu ou d'un mélange réactionnel qui après le durcissement, le détachement du support de coulée (6, 37) et le retournement est disposée à nouveau sur un support de coulée (16, 52) plan et horizontal sur lequel elle est maintenue pour la coulée de la deuxième couche (24, 57) à partir d'une solution, d'un matériau fondu ou d'un mélange réactionnel, cette deuxième couche présentant des propriétés optiques de transparence équivalentes à celles de la première couche, et au moins une des deux couches étant obtenue par coulée d'un mélange réactionel.

2. Procédé selon la revendication 1, caractérisé en ce que la première couche formée et celle déposée après durcissement et retournement de la première sont obtenues à partir d'une même composition se prêtant à la coulée.

3. Procédé selon la revendication 2, caractérisé en ce que ladite composition comprend les constituants nécessaires à l'obtention d'un polyuréthane aliphatique thermodurcissable.

4. Procédé selon la revendication 1, caractérisé en ce que la première couche formée et celle déposée après consolidation et retournement de la première sont obtenues à partir de compositions différentes.

5. Procédé selon la revendication 4, caractérisé en ce que l'une des couches est obtenue à partir d'un mélange réactionnel comprenant les constituants nécessaires à l'obtention d'un polyuréthane aliphatique thermodurcissable et l'autre couche à partir d'une solution, d'une composition fondue ou d'un mélange réactionnel d'un polyuréthane thermoplastique, essentiellement linéaire.

6. Procédé selon la revendication 4, caractérisé en ce que l'une des couches est une couche de polyuréthane aliphatique thermodurcissable et l'autre est une couche d'un polyuréthane légèrement réticulé, obtenu par coulée réactive d'un mélange de composants polyols et isocyanates exclusivement difonctionnels ou présentant une faible quantité de l'un ou l'autre de ces composants sous forme trifonctionnelle.

7. Procédé selon une des revendications 1 à 6, caractérisé en ce qu'on traite la face de la première couche, initialement au contact du support, avant l'apport de la deuxième couche qui recouvre le traitement.

8. Procédé selon la revendication 7, caractérisé en ce qu'on imprime la face de la première couche avant l'apport de la deuxième couche.

9. Dispositif pour la fabrication de films, feuilles ou rubans transparents en matière plastique à au moins deux couches, par coulée d'une première couche (4, 42) puis par coulée d'une deuxième couche (24, 57) après retournement de la première, comprenant un support de coulée plan et horizontal (6, 37) pour la première couche, des moyens d'extraction et de retournement (15, 51) de la première couche disposés entre les deux coulées, des moyens (2, 36) pour l'apport de la matière à couler disposés au-dessus de la zone amont du support de coulée et des moyens (22, 58) pour l'apport de la matière à couler disposés au-dessus de la zone amont de la couche retournée, des moyens pour le durcissement des couches par polymérisation et/ou pour l'évaporation de solvant, caractérisé en ce que pour fabriquer des films, feuilles ou rubans transparents en matière plastique présentant la qualité optique nécessaire pour pouvoir être utilisés dans la fabrication des vitrages feuilletés il est prévu un support de coulée (16, 52) plan et horizontal pour la coulée de la deuxième couche, les supports de coulée pour la première et la deuxième couche étant tous deux constitués d'une bande transporteuse sans fin (6, 16, 37, 52) qui glisse sur une base plane (9, 19, 40, 55) servant d'appui, des moyens pour maintenir la première couche sur le support de coulée pour la fabrication de la deuxième couche étant prévus.

10. Dispositif selon la revendication 9, caractérisé en ce que la bande transporteuse est une bande métallique, en particulier un ruban d'acier.

11. Dispositif selon la revendication 10, caractérisé en ce qu'il comprend un support de coulée formé d'une bande transporteuse horizontale et plane sans fin en acier (6) et un support pour la couche retournée formée également d'une bande transporteuse horizontale, plane, sans fin en acier (16), les deux bandes étant placées l'une au dessus de l'autre, un système d'entraînement (15) permettant d'extraire et de retourner la première couche formée, des têtes de coulée à râcle (22) et (2) pour l'apport de la matière à couler et des éléments de chauffage (13) et (27) permettant le durcissement des couches formées.

12. Dispositif selon une des revendications 9 à 11, caractérisé en ce que le support de coulée est recouvert d'un agent de séparation.

13. Dispositif selon une des revendications 9 à 12, caractérisé en ce qu'il comprend des moyens pour traiter la face de la première couche qui était initialement au contact du support.

14. Dispositif selon la revendication 13, caractérisé en ce que les moyens pour traiter sont des moyens d'impression.

15. Dispositif selon la revendication 14, caractérisé en ce que les moyens pour maintenir la première couche sont des moyens d'aspiration associés à un support de coulée percé de trous.

**Patentansprüche**

1. Verfahren zur Herstellung von transparenten Filmen, Folien oder Bändern aus Kunststoff, mit wenigstens zwei Schichten, durch Gießen einer ersten Schicht (4, 42) aus einer Lösung auf eine ebene und horizontale, sich in Bezug auf das Gießen bewegende Gießunterlage (6, 37), wobei die erste Schicht (4, 42) nach dem Aushärten von der Gießunterlage abgezogen und gewendet wird, und durch Gießen einer zweiten Schicht (24, 57) aus einer Lösung auf diejenige Seite der ersten Schicht (4, 42), die ursprünglich sich in Kontakt mit der Gießunterlage (6, 37) befunden hat, dadurch gekennzeichnet, daß die transparenten Filme, Folien oder Bänder aus Kunststoff mit einer optischen Qualität, wie sie für die Verwendung bei der Herstellung von Verbundglasscheiben erforderlich ist, durch Gießen der ersten Schicht (4, 42) aus einer Lösung, einem geschmolzenen Material oder einer Reaktionsmischung erhalten wird, die nach dem Aushärten, dem Abziehen von der Gießunterlage (6, 37) und dem Wenden von neuem auf eine plane und horizontale Gießunterlage (16, 52) aufgelegt wird, auf der sie für das Gießen der zweiten Schicht (24, 57) aus einer Lösung, einem geschmolzenen Material oder einer Reaktionsmischung gehalten wird, und daß diese zweite Schicht optische Eigenschaften der Transparenz aufweist, die mit denen der ersten Schicht vergleichbar sind, und daß wenigstens eine der beiden Schichten durch Gießen einer Reaktionsmischung erhalten wird.

2. Verfahren nach Anspruch 1, dadurch gekennzeichnet, daß die erste gebildete Schicht und diejenige Schicht, die nach dem Aushärten und Wenden der ersten Scheiht aufgetragen wird, aus derselben gießfähigen Zusammensetzung erhalten werden.

3. Verfahren nach Anspruch 2, dadurch gekennzeichnet, daß die Zusammensetzung die Bestandteil enthält, die für ein wärmehärtendes aliphatisches Polyurethan erforderlich sind.

4. Verfahren nach Anspruch 1, dadurch gekennzeichnet, daß die erste gebildete Schicht und diejenige Schicht, die nach der Verfestigung und dem Wenden der ersten Schicht aufgetragen wird, aus unterschiedlichen Zusammensetzungen erhalten werden.

5. Verfahren nach Anspruch 4, dadurch gekennzeichnet, daß die eine der Schichten aus einer Reaktionsmischung mit den für ein aliphatisches wärmehärtendes Polyurethan erforderlichen Komponenten erhalten wird und die andere Schicht aus einer Lösung, einer Schmelze oder einer Reaktionsmischung eines im wesentlichen linearen, thermoplastischen Polyurethans.

6. Verfahren nach den Anspruch 4, dadurch gekennzeichnet, daß die eine der Schichten eine Schicht aus wärmehärtendem aliphatischen Polyurethan ist und die andere Schicht aus leicht vernetztem Polyurethan besteht, die durch reaktives Gießen einer Mischung von Polyol- und Isocyanatkomponenten erhalten wird, wobei die Polyol- und Isocyanatkomponenten aussschließlich difunktionell sind oder ein geringer Anteil der einen oder der anderen Komponente in trifunktioneller Form vorliegt.

7. Verfahren nach einem der Ansprüche 1 bis 6, dadurch gekennzeichnet, daß die Seite der ersten Schicht, die ursprünglich in Kontakt mit der Unterlage war, vor dem Aufbringen der zweiten Schicht behandelt wird und die zweite Schicht die Behandlung überdeckt.

8. Verfahren nach Anspruch 7, dadurch gekennzeichnet, daß die Seite der ersten Schicht vor dem Aufbringen der zweiten Schicht bedruckt wird.

9. Verfahren für die Herstellung von wenigstens zweischichtigen transparenten Filmen, Folien oder Bändern aus Kunststoff, durch Gießen einer ersten Schicht (4, 42) und darauffolgendes Gießen einer zweiten Schicht (24, 57) nach dem Wenden der ersten Schicht, mit einer planen und horizontalen Gießunterlage (6, 37) für die erste Schicht, zwischen den beiden Gießeinrichtungen angeordneten Mitteln zum Abziehen und zum Wenden (15, 51) der ersten Schicht, oberhalb der vorderen Zone der Gießunterlage angeordneten Mitteln (2, 36) für die Zuführung der Gießmasse, und oberhalb der vorderen Zone der gewendeten Schicht angeordneten Mitteln (22, 58) für die Zuführung der Gießmasse, und Mitteln für die Aushärtung der Schichten durch Polymerisation und/oder für die Verdampfung des Lösungsmittels, dadurch gekennzeichnet, daß für die Herstellung von transparenten Filmen, Folien oder Bändern aus Kunststoff mit einer optischen Qualität, wie sie für ihre Verwendung bei der Herstellung von Verbundglasscheiben erforderlich ist, eine plane und horizontale Gießunterlage (16, 52) für das Gießen der zweiten Schicht vorgesehen ist, die Gießunterlagen für die erste und die zweite Schicht jeweils aus einem endlosen Transportband (6, 16, 37, 52) bestehen, das auf einer planen, zur Abstützung dienenden Unterlage (9, 19, 40, 55) gleitet, und daß Mittel zum Halten der ersten Schicht auf der Gießunterlage für die Herstellung der zweiten Schicht vorgesehen sind.

10. Vorrichtung nach Anspruch 9, dadurch gekennzeichnet, daß das Transortband ein Metallband, insbesondere ein Stahlband ist.

11. Vorrichtung nach Anspruch 10, dadurch gekennzeichnet, daß sie eine aus einem horizontalen und planen, endlosen Stahlband (6) bestehende Gießunterlage und eine ebenfalls aus einem horizontalen, planen, endlosen Stahlband (16) bestehende Unterlage für die gewendete Schicht aufweist, wobei die beiden Bänder untereinander angeordnet sind, daß sie ferner ein Mitnehmersystem (15) aufweist, das er erlaubt, die zuerst gebildete Schicht abzuziehen und zu wenden, sowie ferner Abstreichgießköpfe (22) und (2) für die Zuführung der Gießmasse und Heizelemente (13) und (27) für die Aushärtung der gebildeten Schichten.

12. Vorrichtung nach einem der Ansprüche 9 bis 11, dadurch gekennzeichnet, daß die Gießunterlage mit einem Trennmittel versehen ist.

13. Vorrichtung nach einem der Ansprüche 9 bis 12, dadurch gekennzeichnet, daß sie Mittel zum Behandeln der Oberfläche der ersten Schicht, die ursprünglich in Kontakt mit der Unterlage war, aufweist.

14. Vorrichtung nach Anspruch 13, dadurch gekennzeichnet, daß die Mittel zum Behandeln Druckeinrichtungen sind.

15. Vorrichtung nach Anspruch 14, dadurch gekennzeichnet, daß die Mittel zum Halten der ersten Schicht Saugeinrichtungen sind, die mit einer mit Löchern versehenen Gießunterlage verbunden sind.

**Claims**

1. A method for making transparent films, sheets or bands of plastics material, having at least two layers, by casting of a first layer (4, 42) from a solution onto a plane, horizontal casting support (6, 37) which is in movement relative to the casting, the first layer (4, 42) being separated from the support after setting and turned over, then by casting of a second layer (24, 57) from a solution onto that face of the first layer (4, 42) which initially was in contact with the casting support (6, 37), characterized in that the transparent films, sheets or bands of plastics material possessing an optical quality necessary for enabling them to be used in the manufacture of laminated panes are produced by casting of the first layer (4, 42) from a solution, from a molten material or from a reaction mixture which, after the setting, the separation from the casting support (6, 37) and the turning-over, is again disposed on a plane, horizontal casting support (16, 52), on which it is held for the casting of the second layer (24, 57) from a solution, from a molten material or from a reaction mixture, this second layer possessing optical and transparency properties equivalent to those of the first layer, and at least one of the two layers being produced by casting of a reaction mixture.

2. A method according to claim 1, characterized in that the first layer formed and that deposited after setting and turning-over of the first layer are produced from a single composition suitable for casting.

3. A method according to claim 2, characterized in that said composition comprises the constituents necessary for obtaining a thermosetting aliphatic polyurethane.

4. A method according to claim 1, characterized in that the first layer formed and that deposited after consolidation and turning-over of the first layer are produced from different compositions.

5. A method according to claim 4, characterized in that one of the layers is produced from a reaction mixture comprising the constituents necessary for obtaining a thermosetting aliphatic polyurethane and the other layer from a solution, from a melted composition or from a reaction mixture of an essentially linear thermoplastic polyurethane.

6. A method according to claim 4, characterized in that one of the layers is a layer of thermosetting aliphatic polyurethane and the other is a layer of a slightly cross-linked polyurethane, produced by reactive casting of a mixture of polyol components and exclusively difunctional isocyanate components or comprising a small quantity of the one or the other of these components in trifunctional form.

7. A method according to one of claims 1 to 6, characterized in that the face of the first layer which initially was in contact with the support is treated before the application of the second layer which covers the treatment.

8. A method according to claim 7, characterized in that the face of the first layer is printed before the application of the second layer.

9. Apparatus for making transparent films, sheets or bands of plastics material having at least two layers, by casting of a first layer (4, 42) then by casting of a second layer (24, 57) after turning-over of the first layer, comprising a horizontal, plane casting support (6, 37) for the first layer, means for extracting and turning over (15, 51) the second layer disposed between the two casting stages, means (2, 36) for the application of the material to be cast disposed above the upstream zone of the casting support and means (22, 58) for the application of the material to be cast disposed above the upstream zone of the turned-over layer, means for setting of the layers by polymerisation and/or for the evaporation of solvent, characterized in that, for the production of transparent films, sheets or bands of plastics material possessing the optical quality necessary for enabling them to be used in the manufacture of laminated panes, there is provided a horizontal, plane casting support (16, 52) for the casting of the second layer, the casting supports for the first and the second layers being both constituted of an endless conveyor belt (6, 16, 37, 52) which slides over a plane base (9, 19, 40, 55) serving as bearing, means being provided for holding the first layer on the casting support for the production of the second layer.

10. Apparatus according to claim 9, characterized in that the conveyor belt is a metal belt, in particular a steel band.

11. Apparatus according to claim 10, characterized in that it comprises a casting support formed of an endless, plane, horizontal conveyor belt of steel (6) and a support for the turned-over layer, also formed of an endless, plane, horizontal conveyor belt of steel (16), the two belts being situated the one above the other, an entraining system (15) enabling the first layer formed to be extracted and turned over, scraper casting heads (22) and (2) for the application of the material to be cast and heating elements (13) and (27) enabling the layers formed to be set.

12. Apparatus according to one of claims 9 to 11, characterized in that the casting support is covered with a parting agent.

13. Apparatus according to one of claims 9 to 12, characterized in that it comprises means for the treatment of the face of the first layer which was initially in contact with the support.

14. Apparatus according to claim 13, characterized in that the means for treatment are printing means.

15. Apparatus according to claim 14, characterized in that the means for holding the first layer are suction means associated with a casting support perforated by holes.

Fig. 1

EP 0 133 112 B1

Fig. 2